# EUROPEAN PATENT SPECIFICATION

(11) **EP 3 582 560 B1**
(45) Date of publication and mention of the grant of the patent: **13.01.2021**
(21) Application number: 19173312.0
(22) Date of filing: 13.05.2014
(51) Int. Cl.: H04W 64/00, H04W 4/80

(54) **POSITIONING METHOD AND COMMUNICATIONS DEVICE**
POSITIONIERUNGSVERFAHREN UND KOMMUNIKATIONSVORRICHTUNG
PROCÉDÉ DE POSITIONNEMENT ET DISPOSITIF DE COMMUNICATION

(43) Date of publication of application: 18.12.2019
(62) Divisional of application: 14892112.5
(73) Proprietor: Huawei Technologies Co., Ltd., Shenzhen, Guangdong 518129 (CN)
(72) Inventor: CHEN, Daiting, Shenzhen, Guangdong 518129 (CN)
(74) Representative: Goddar, Heinz J.

(56) References cited:
- US-A1- 2013 217 332
- US-A1- 2013 281 110
- US-A1- 2013 285 855

## Description

### TECHNICAL FIELD

Embodiments of the present invention relate to the field of communications technologies, and in particular, to a positioning method and a communications device.

### BACKGROUND

A Global Position System (GPS for short) is an intermediate circular orbit satellite navigation system, and the GPS can provide accurate positioning and velocity measurement and a high-precision time standard in most regions on the Earth surface. Therefore, a communications device that has a GPS function can position a position of the communications device by using the GPS.

However, in the prior art, a communications device can learn position information of the communications device but cannot obtain position information of another communications device.

US 2013/217332 A1 discloses that a system for locating a wireless identity transmitter. The system comprise a central server, one or more proximity broadcast receivers and a wireless identity transmitter.

US 2013/281110 A1 discloses a method for determining the location of a querying mobile device, wherein a request is received from the querying mobile device via a communication network.

US 2013/285855 A1 discloses a wireless location system including one or more location centers for outputting locations of mobile stations (MS) for both local and global MS location requests via Internet communication between a distributed network of location centers.

### SUMMARY

The present invention provides a positioning method of claim 1 and a communications device of claim 6 that are used to implement that position information of another communications device can be obtained. In the following, embodiments not covered by the claims should be considered as examples helpful for understanding the invention.

According to a first aspect, an embodiment of the present invention provides a positioning method, including:
receiving, by a first communications device, a first positioning request message, where the first positioning request message includes an identifier of a to-be-positioned communications device, and the first positioning request message is used to request position information of the to-be-positioned communications device; and
obtaining, by the first communications device, the position information of the to-be-positioned communications device according to the identifier of the to-be-obtaining, by the first communications device, the position information of the to-be-positioned communications device according to the identifier of the to-be-positioned communications device by using a short-range wireless communications technology.

In a first possible implementation manner of the first aspect, after the obtaining, by the first communications device, the position information of the to-be-positioned communications device according to the identifier of the to-be-positioned communications device by using a short-range wireless communications technology, the method further includes:
storing, by the first communications device, a correspondence between the identifier and the position information that are of the to-be-positioned communications device according to the identifier of the to-be-positioned communications device and the position information of the to-be-positioned communications device; and
determining, by the first communications device, the position information of the to-be-positioned communications device from the stored correspondence according to the identifier of the to-be-positioned communications device.

With reference to the first aspect or the first possible implementation manner of the first aspect, in a second possible implementation manner of the first aspect, before the obtaining, by the first communications device, the position information of the to-be-positioned communications device according to the identifier of the to-be-positioned communications device by using a short-range wireless communications technology, the method further includes:
receiving, by the first communications device by using the short-range wireless communications technology, a broadcast message sent by the to-be-positioned communications device, where the broadcast message includes the identifier and the position information that are of the to-be-positioned communications device; and
the obtaining, by the first communications device, the position information of the to-be-positioned communications device according to the identifier of the to-be-positioned communications device by using a short-range wireless communications technology includes:
   obtaining, by the first communications device, the position information of the to-be-positioned communications device according to the broadcast message.

With reference to the first aspect or the first possible implementation manner of the first aspect, in a third possible implementation manner of the first aspect, before the obtaining, by the first communications device, the position information of the to-be-positioned communications device according to the identifier of the to-be-positioned communications device by using a short-range wireless communications technology, the method further includes:
receiving, by the first communications device by using the short-range wireless communications technology, a broadcast message sent by the to-be-positioned communications device, where the broadcast message includes the identifier of the to-be-positioned communications device;
establishing, by the first communications device, a communication link to the to-be-positioned communications device according to the broadcast message;
sending, by the first communications device, a position information request message to the to-be-positioned communications device by using the communication link; and
receiving, by the first communications device, a position information response message sent by the to-be-positioned communications device, where the position information response message includes the position information of the to-be-positioned communications device; and
the obtaining, by the first communications device, the position information of the to-be-positioned communications device according to the identifier of the to-be-positioned communications device by using a short-range wireless communications technology includes:
   obtaining, by the first communications device, the position information of the to-be-positioned communications device according to the position information response message.

With reference to the first aspect or the first possible implementation manner of the first aspect, in a fourth possible implementation manner of the first aspect, before the obtaining, by the first communications device, the position information of the to-be-positioned communications device according to the identifier of the to-be-positioned communications device by using a short-range wireless communications technology, the method further includes:
receiving, by the first communications device by using the short-range wireless communications technology, a broadcast message sent by the to-be-positioned communications device, where the broadcast message includes the identifier of the to-be-positioned communications device; and
the obtaining, by the first communications device, the position information of the to-be-positioned communications device according to the identifier of the to-be-positioned communications device by using a short-range wireless communications technology includes:
   determining, by the first communications device, the position information of the to-be-positioned communications device according to signal strength of the broadcast message.

With reference to the first aspect or the first possible implementation manner of the first aspect, in a fifth possible implementation manner of the first aspect, before the obtaining, by the first communications device, the position information of the to-be-positioned communications device according to the identifier of the to-be-positioned communications device by using a short-range wireless communications technology, the method further includes:
sending, by the first communications device, a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology; and
receiving, by the first communications device, a second positioning response message sent by the third communications device, where the second positioning response message includes the position information of the to-be-positioned communications device; and
the obtaining, by the first communications device, the position information of the to-be-positioned communications device according to the identifier of the to-be-positioned communications device by using a short-range wireless communications technology includes:
   obtaining, by the first communications device, the position information of the to-be-positioned communications device according to the second positioning response message.

With reference to the first aspect or any possible implementation manner of the first to the fifth implementation manners of the first aspect, in a sixth possible implementation manner of the first aspect, the first communications device includes a display, and the receiving, by a first communications device, a first positioning request message includes:
receiving, by the first communications device, the first positioning request message entered by a user; and
after the obtaining, by the first communications device, the position information of the to-be-positioned communications device according to the identifier of the to-be-positioned communications device by using a short-range wireless communications technology, the method further includes:
   displaying the position information of the to-be-positioned communications device by using the display.

With reference to the first aspect or any possible implementation manner of the first to the sixth implementation manners of the first aspect, in a seventh possible implementation manner of the first aspect, the receiving, by a first communications device, a first positioning request message includes:
receiving, by the first communications device, the first positioning request message sent by a second communications device; and
after the obtaining, by the first communications device, the position information of the to-be-positioned communications device according to the identifier of the to-be-positioned communications device by using a short-range wireless communications technology, the method further includes:
   sending, by the first communications device, a first positioning response message to the second communications device, where the first positioning response message includes the position information of the to-be-positioned communications device.

According to a second aspect, an embodiment of the present invention provides a communications device, including:
a receiving unit, configured to receive a first positioning request message, where the first positioning request message includes an identifier of a to-be-positioned communications device, and the first positioning request message is used to request position information of the to-be-positioned communications device; and
a processing unit, configured to obtain, by using a short-range wireless communications technology, the position information of the to-be-positioned communications device according to the identifier of the to-be-positioned communications device that is included in the first positioning request message received by the receiving unit.

In a first possible implementation manner of the second aspect, the communications device further includes:
a storage unit, configured to: after the processing unit obtains, by using the short-range wireless communications technology, the position information of the to-be-positioned communications device according to the identifier of the to-be-positioned communications device that is included in the first positioning request message received by the receiving unit, store a correspondence between the identifier and the position information that are of the to-be-positioned communications device according to the identifier of the to-be-positioned communications device and the position information of the to-be-positioned communications device; and
the processing unit is further configured to determine, according to the identifier of the to-be-positioned communications device, the position information of the to-be-positioned communications device from the correspondence stored in the storage unit.

With reference to the second aspect or the first possible implementation manner of the second aspect, in a second possible implementation manner of the second aspect, the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier and the position information that are of the to-be-positioned communications device; and
the processing unit is specifically configured to obtain the position information of the to-be-positioned communications device according to the broadcast message.

With reference to the second aspect or the first possible implementation manner of the second aspect, in a third possible implementation manner of the second aspect, the communications device further includes an establishing unit and a first sending unit;
the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device;
the establishing unit is configured to establish a communication link to the to-be-positioned communications device according to the broadcast message received by the receiving unit;
the first sending unit is configured to send a position information request message to the to-be-positioned communications device by using the communication link established by the establishing unit;
the receiving unit is further configured to receive a position information response message sent by the to-be-positioned communications device, where the position information response message includes the position information of the to-be-positioned communications device; and
the processing unit is specifically configured to obtain the position information of the to-be-positioned communications device according to the position information response message.

With reference to the second aspect or the first possible implementation manner of the second aspect, in a fourth possible implementation manner of the second aspect, the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device; and
the processing unit is specifically configured to determine the position information of the to-be-positioned communications device according to signal strength of the broadcast message received by the receiving unit.

With reference to the second aspect or the first possible implementation manner of the second aspect, in a fifth possible implementation manner of the second aspect, the communications device further includes:
a first sending unit, configured to: before the processing unit obtains the position information of the to-be-positioned communications device according to the identifier of the to-be-positioned communications device by using the short-range wireless communications technology, send a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology;
the receiving unit is further configured to receive a second positioning response message sent by the third communications device, where the second positioning response message includes the position information of the to-be-positioned communications device; and
the processing unit is specifically configured to obtain the position information of the to-be-positioned communications device according to the second positioning response message received by the receiving unit.

With reference to the second aspect or any possible implementation manner of the first to the fifth implementation manners of the second aspect, in a sixth possible implementation manner of the second aspect, the communications device further includes a display unit;
the receiving unit is specifically configured to receive the first positioning request message entered by a user; and
the display unit is configured to: after the processing unit obtains the position information of the to-be-positioned communications device according to the identifier of the to-be-positioned communications device by using the short-range wireless communications technology, display the position information of the to-be-positioned communications device.

With reference to the second aspect or any possible implementation manner of the first to the sixth implementation manners of the second aspect, in a seventh possible implementation manner of the second aspect, the communications device further includes a second sending unit;
the receiving unit is specifically configured to receive the first positioning request message sent by a second communications device; and
the second sending unit is configured to: after the processing unit obtains the position information of the to-be-positioned communications device according to the identifier of the to-be-positioned communications device by using the short-range wireless communications technology, send a first positioning response message to the second communications device, where the first positioning response message includes the position information of the to-be-positioned communications device.

According to a third aspect, an embodiment of the present invention provides a communications device, including:
a transceiver, configured to receive a first positioning request message, where the first positioning request message includes an identifier of a to-be-positioned communications device, and the first positioning request message is used to request position information of the to-be-positioned communications device; and
a processor, configured to obtain, by using a short-range wireless communications technology, the position information of the to-be-positioned communications device according to the identifier of the to-be-positioned communications device that is included in the first positioning request message received by the transceiver.

In a first possible implementation manner of the third aspect, the communications device further includes:
a memory, configured to: after the processor obtains, by using the short-range wireless communications technology, the position information of the to-be-positioned communications device according to the identifier of the to-be-positioned communications device that is included in the first positioning request message received by the transceiver, store a correspondence between the identifier and the position information that are of the to-be-positioned communications device according to the identifier of the to-be-positioned communications device and the position information of the to-be-positioned communications device; and
the processor is further configured to determine, according to the identifier of the to-be-positioned communications device, the position information of the to-be-positioned communications device from the correspondence stored in the memory.

With reference to the third aspect or the first possible implementation manner of the third aspect, in a second possible implementation manner of the third aspect, the transceiver is further configured to: before the processor obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier and the position information that are of the to-be-positioned communications device; and
the processor is specifically configured to obtain the position information of the to-be-positioned communications device according to the broadcast message.

With reference to the third aspect or the first possible implementation manner of the third aspect, in a third possible implementation manner of the third aspect,
the transceiver is further configured to: before the processor obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device;
the processor is further configured to establish a communication link to the to-be-positioned communications device according to the broadcast message received by the transceiver;
the transceiver is further configured to send a position information request message to the to-be-positioned communications device by using the communication link established by the processor, and receive a position information response message sent by the to-be-positioned communications device, where the position information response message includes the position information of the to-be-positioned communications device; and
that the processor obtains the position information of the to-be-positioned communications device according to the identifier of the to-be-positioned communications device by using the short-range wireless communications technology is specifically: the processor obtains the position information of the to-be-positioned communications device according to the position information response message.

With reference to the third aspect or the first possible implementation manner of the third aspect, in a fourth possible implementation manner of the third aspect, the transceiver is further configured to: before the processor obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device; and
the processor is specifically configured to determine the position information of the to-be-positioned communications device according to signal strength of the broadcast message received by the transceiver.

With reference to the third aspect or the first possible implementation manner of the third aspect, in a fifth possible implementation manner of the third aspect, the transceiver is further configured to: before the processor obtains the position information of the to-be-positioned communications device according to the identifier of the to-be-positioned communications device by using the short-range wireless communications technology, send a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology; and receive a second positioning response message sent by the third communications device, where the second positioning response message includes the position information of the to-be-positioned communications device; and
the processor is specifically configured to obtain the position information of the to-be-positioned communications device according to the second positioning response message received by the transceiver.

With reference to the third aspect or any possible implementation manner of the first to the fifth implementation manners of the third aspect, in a sixth possible implementation manner of the third aspect, the communications device further includes an output device;
the transceiver is specifically configured to receive the first positioning request message entered by a user; and
the output device is configured to: after the processor obtains the position information of the to-be-positioned communications device according to the identifier of the to-be-positioned communications device by using the short-range wireless communications technology, display the position information of the to-be-positioned communications device.

With reference to the third aspect or any possible implementation manner of the first to the sixth implementation manners of the third aspect, in a seventh possible implementation manner of the third aspect, that the transceiver receives the first positioning request message is specifically: the transceiver receives the first positioning request message sent by a second communications device; and
the transceiver is further configured to: after the processor obtains the position information of the to-be-positioned communications device according to the identifier of the to-be-positioned communications device by using the short-range wireless communications technology, send a first positioning response message to the second communications device, where the first positioning response message includes the position information of the to-be-positioned communications device.

According to the positioning method and the communications device that are provided in the embodiments of the present invention, a first communications device receives a first positioning request message, where the first positioning request message includes an identifier of a to-be-positioned communications device, and the first positioning request message is used to request position information of the to-be-positioned communications device; and the first communications device obtains the position information of the to-be-positioned communications device according to the identifier of the to-be-positioned communications device by using a short-range wireless communications technology. Therefore, it is implemented that the first communications device can obtain position information of another communications device.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a first embodiment of a positioning method according to the present invention;
FIG. 2 is a flowchart of a second embodiment of a positioning method according to the present invention;
FIG. 3 is a flowchart of a third embodiment of a positioning method according to the present invention;
FIG. 4 is a flowchart of a fourth embodiment of a positioning method according to the present invention;
FIG. 5 is a flowchart of a fifth embodiment of a positioning method according to the present invention;
FIG. 6 is a flowchart of a sixth embodiment of a positioning method according to the present invention;
FIG. 7 is a schematic structural diagram of a first embodiment of a communications device according to the present invention;
FIG. 8 is a schematic structural diagram of a second embodiment of a communications device according to the present invention;
FIG. 9 is a schematic structural diagram of a third embodiment of a communications device according to the present invention; and
FIG. 10 is a schematic structural diagram of a fourth embodiment of a communications device according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

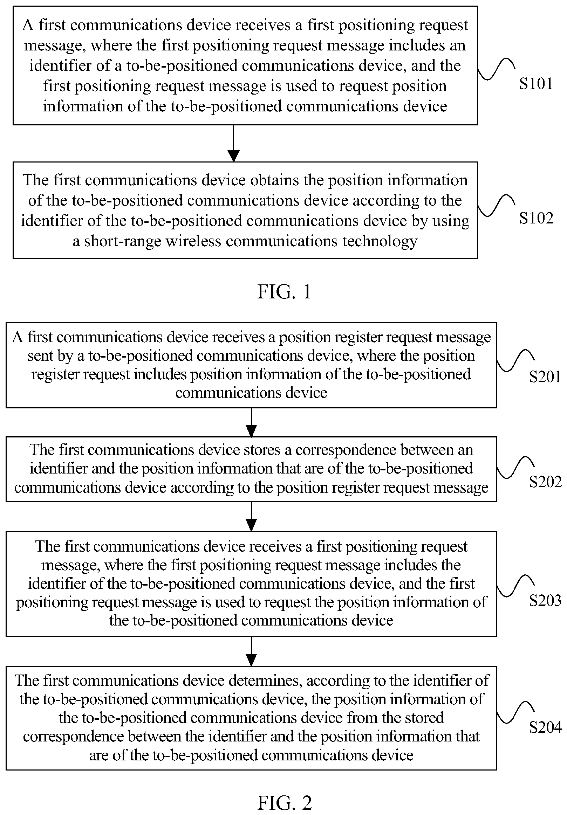

FIG. 1 is a flowchart of a first embodiment of a positioning method according to the present invention. As shown in FIG. 1, the method in this embodiment may include the following steps:
S101. A first communications device receives a first positioning request message, where the first positioning request message includes an identifier of a to-be-positioned communications device, and the first positioning request message is used to request position information of the to-be-positioned communications device.

In this embodiment, the first communications device receives the first positioning request message, where the first positioning request message includes the identifier of the to-be-positioned communications device, and the first positioning request message is used to request the position information of the to-be-positioned communications device corresponding to the identifier. The to-be-positioned communications device in this embodiment may be a communications device that supports a short-range wireless communications technology, where the short-range wireless communications technology may be Wireless Fidelity (Wireless Fidelity, WiFi for short), Bluetooth (Bluetooth), Near Field Communication (Near Field Communication, NFC for short), and the like.

S102. The first communications device obtains the position information of the to-be-positioned communications device according to the identifier of the to-be-positioned communications device by using a short-range wireless communications technology.

In this embodiment, the first communications device determines, according to the received first positioning request message, that the first communications device needs to obtain the position information of the to-be-positioned communications device corresponding to the identifier, so that the first communications device can obtain the position information of the to-be-positioned communications device according to the identifier of the to-be-positioned communications device by using the short-range wireless communications technology. The position information of the to-be-positioned communications device may be longitude information and latitude information of a position of the to-be-positioned communications device; or the position information of the to-be-positioned communications device may be in which building, which street, which district (county), and which city the to-be-positioned communications device is located; the position information of the to-be-positioned communications device may be a relative position of the to-be-positioned communications device with respect to the first communications device; or the like.

In this embodiment, the first communications device may obtain the position information of the to-be-positioned communications device corresponding to the identifier by using the short-range wireless communications technology (for example, WiFi or Bluetooth). That is, when the first communications device finds by means of scanning, by using the short-range wireless communications technology, that the to-be-positioned communications device corresponding to the identifier exists around the first communications device, the first communications device may obtain the position information of the to-be-positioned communications device. For example, position information of the first communications device may be used as the position information of the to-be-positioned communications device.

In a feasible implementation manner, after the first communications device obtains the position information of the to-be-positioned communications device according to the identifier of the to-be-positioned communications device by using the short-range wireless communications technology, the method further includes: storing, by the first communications device, a correspondence between the identifier and the position information that are of the to-be-positioned communications device according to the identifier of the to-be-positioned communications device and the position information of the to-be-positioned communications device; and determining, by the first communications device, the position information of the to-be-positioned communications device from the stored correspondence according to the identifier of the to-be-positioned communications device. In this embodiment, after obtaining the position information of the to-be-positioned communications device according to the identifier of the to-be-positioned communications device by using the short-range wireless communications technology, the first communications device generates the correspondence between the identifier and the position information that are of the to-be-positioned communications device and may store the correspondence between the identifier and the position information that are of the to-be-positioned communications device. When the first communications device stores the correspondence between the identifier and the position information that are of the to-be-positioned communications device, the first communications device may determine, from a stored correspondence between an identifier and position information that are of a communications device, the correspondence between the identifier and the position information that are of the to-be-positioned communications device according to the identifier of the to-be-positioned communications device, and thereby determine the position information of the to-be-positioned communications device.

In this embodiment, a first communications device receives a first positioning request message, where the first positioning request message includes an identifier of a to-be-positioned communications device, and the first positioning request message is used to request position information of the to-be-positioned communications device; and the first communications device obtains the position information of the to-be-positioned communications device according to the identifier of the to-be-positioned communications device by using a short-range wireless communications technology. Therefore, it is implemented that the first communications device can obtain position information of another communications device.

FIG. 2 is a flowchart of a second embodiment of a positioning method according to the present invention. As shown in FIG. 2, the method in this embodiment may include the following steps.

S201. A first communications device receives a position register request message sent by a to-be-positioned communications device, where the position register request includes position information of the to-be-positioned communications device.

S202. The first communications device stores a correspondence between an identifier and the position information that are of the to-be-positioned communications device according to the position register request message.

In this embodiment, the to-be-positioned communications device may send the position register request message to the first communications device, where the position register request message includes the position information of the to-be-positioned communications device, so that the first communications device can receive the position register request message sent by the to-be-positioned communications device; then the first communications device can obtain the position information of the to-be-positioned communications device according to the position register request message, and store the position information of the to-be-positioned communications device, that is, store the correspondence between the identifier and the position information that are of the to-be-positioned communications device.

For example, a holder of the to-be-positioned communications device needs to fly to Shenzhen by plane, and before the plane takes off, the holder may send, by using the to-be-positioned communications device, position information (for example, flying to Shenzhen) to the first communications device (for example, a position management server) by using a position register request message. The first communications device may store information that the holder of the to-be-positioned communications device will fly to Shenzhen.

For example, when the to-be-positioned communications device nearly runs out of power, the to-be-positioned communications device may send position information (for example, being located in a building A) of the to-be-positioned communications device to the first communications device by using a position register request message. The first communications device may store information that the to-be-positioned communications device is located in the building A.

S203. The first communications device receives a first positioning request message, where the first positioning request message includes the identifier of the to-be-positioned communications device, and the first positioning request message is used to request the position information of the to-be-positioned communications device.

S204. The first communications device determines, according to the identifier of the to-be-positioned communications device, the position information of the to-be-positioned communications device from the stored correspondence between the identifier and the position information that are of the to-be-positioned communications device.

In this embodiment, in a feasible implementation manner, the first communications device may receive the first positioning request message entered by a user. For example, when the user needs to obtain the position information of the to-be-positioned communications device, the user may enter an instruction in the first communications device, where the instruction indicates that the position information of the to-be-positioned communications device needs to be obtained. Then the first communications device determines the stored correspondence between the identifier and the position information that are of the to-be-positioned communications device according to the identifier of the to-be-positioned communications device, and thereby determines the position information of the to-be-positioned communications device. Further, the first communications device may display the position information of the to-be-positioned communications device. For example, the position information of the to-be-positioned communications device may be displayed to the user in a textual or graphic manner.

In this embodiment, in another feasible implementation manner, when a user of a second communications device needs to obtain the position information of the to-be-positioned communications device, if the second communications device cannot directly find the to-be-positioned communications device by means of scanning or the second communications device does not store the position information of the to-be-positioned communications device, the first communications device may receive the first positioning request message sent by the second communications device. Then the first communications device determines the stored correspondence between the identifier and the position information that are of the to-be-positioned communications device according to the identifier of the to-be-positioned communications device, and thereby determines the position information of the to-be-positioned communications device. Further, the first communications device may send a first positioning response message to the second communications device, where the first positioning response message includes the position information of the to-be-positioned communications device. Further, the second communications device may display the position information of the to-be-positioned communications device. For example, the position information of the to-be-positioned communications device may be displayed to the user in a textual or graphic manner.

According to this embodiment, a first communications device receives a position register request message sent by a to-be-positioned communications device, where the position register request includes position information of the to-be-positioned communications device; stores a correspondence between an identifier and the position information that are of the to-be-positioned communications device according to the position register request message; receives a first positioning request message, where the first positioning request message includes the identifier of the to-be-positioned communications device, and the first positioning request message is used to request the position information of the to-be-positioned communications device; and determines, according to the identifier of the to-be-positioned communications device, the position information of the to-be-positioned communications device from the stored correspondence between the identifier and the position information that are of the to-be-positioned communications device. Therefore, it is implemented that the first communications device can obtain position information of another communications device.

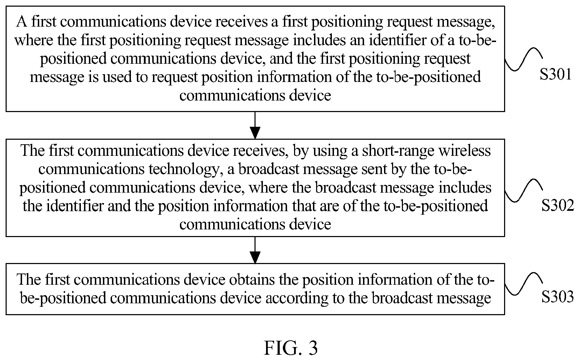

FIG. 3 is a flowchart of a third embodiment of a positioning method according to the present invention. As shown in FIG. 3, the method in this embodiment may include the following steps:
S301. A first communications device receives a first positioning request message, where the first positioning request message includes an identifier of a to-be-positioned communications device, and the first positioning request message is used to request position information of the to-be-positioned communications device.

In this embodiment, the first communications device may receive the first positioning request message entered by a user. Alternatively, the first communications device receives the first positioning request message sent by a second communications device. For a specific implementation process, refer to related records in S203 in the second method embodiment of the present invention. Details are not described herein again.

S302. The first communications device receives, by using a short-range wireless communications technology, a broadcast message sent by the to-be-positioned communications device, where the broadcast message includes the identifier and the position information that are of the to-be-positioned communications device.

S303. The first communications device obtains the position information of the to-be-positioned communications device according to the broadcast message.

In this embodiment, the first communications device may receive, by using the short-range wireless communications technology, the broadcast message sent by the to-be-positioned communications device. Specifically, the to-be-positioned communications device may broadcast the position information to another communications device. When determining, by using the short-range wireless communications technology, that communications devices that support the same short-range wireless communications technology exist in a scanning distance range, the first communications device may receive broadcast messages sent by the communications devices, where the broadcast messages include identifiers and position information that are of the communications devices. When a broadcast message that is sent by a communications device and is received by the first communications device includes the identifier of the to-be-positioned communications device, it may be determined that the communications device is the to-be-positioned communications device, where position information included in the broadcast message is the position information of the to-be-positioned communications device. It should be noted that the scanning distance range of the first communications device is related to the short-range wireless communications technology.

Further, the first communications device in this embodiment includes a display. This embodiment may further include the following: The first communications device may display the position information of the to-be-positioned communications device by using the display; or the first communications device sends a first positioning response message to the second communications device, where the first positioning response message includes the position information of the to-be-positioned communications device.

According to this embodiment, a first communications device receives a first positioning request message, where the first positioning request message includes an identifier of a to-be-positioned communications device, and the first positioning request message is used to request position information of the to-be-positioned communications device; receives, by using a short-range wireless communications technology, a broadcast message sent by the to-be-positioned communications device, where the broadcast message includes the identifier and the position information that are of the to-be-positioned communications device; and thereby obtains the position information of the to-be-positioned communications device. Therefore, it is implemented that the first communications device can obtain position information of another communications device.

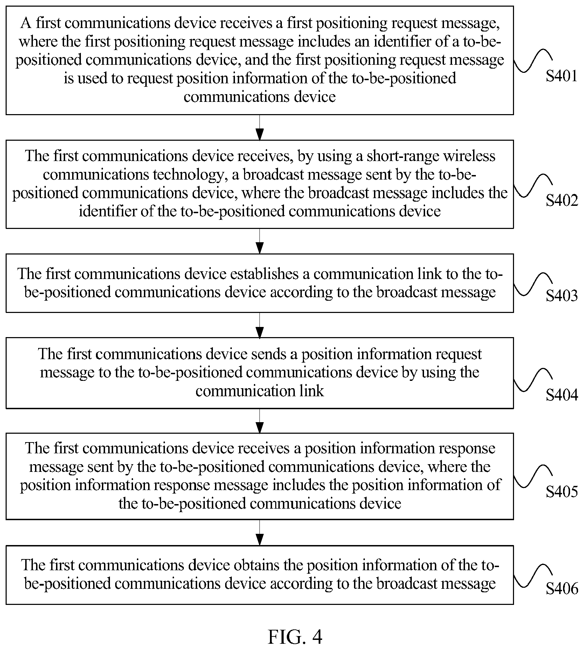

FIG. 4 is a flowchart of a fourth embodiment of a positioning method according to the present invention. As shown in FIG. 4, the method in this embodiment may include the following steps.

S401. A first communications device receives a first positioning request message, where the first positioning request message includes an identifier of a to-be-positioned communications device, and the first positioning request message is used to request position information of the to-be-positioned communications device.

In this embodiment, a specific implementation process of S401 is similar to the specific implementation process of S301 in the third method embodiment of the present invention. For details, refer to related records in the foregoing method embodiment of the present invention. Details are not described herein again.

S402. The first communications device receives, by using a short-range wireless communications technology, a broadcast message sent by the to-be-positioned communications device, where the broadcast message includes the identifier of the to-be-positioned communications device.

S403. The first communications device establishes a communication link to the to-be-positioned communications device according to the broadcast message.

S404. The first communications device sends a position information request message to the to-be-positioned communications device by using the communication link.

S405. The first communications device receives a position information response message sent by the to-be-positioned communications device, where the position information response message includes the position information of the to-be-positioned communications device.

S406. The first communications device obtains the position information of the to-be-positioned communications device according to the broadcast message.

In this embodiment, the first communications device receives, by using the short-range wireless communications technology, the broadcast message sent by the to-be-positioned communications device. Specifically, the to-be-positioned communications device in this embodiment does not send the position information to another communications device by using the broadcast message. When determining, by using the short-range wireless communications technology, that communications devices that support the same short-range wireless communications technology exist in a scanning distance range, the first communications device may receive broadcast messages sent by the communications devices, where the broadcast messages include identifiers of the communications devices. When a broadcast message that is sent by a communications device and is received by the first communications device includes the identifier of the to-be-positioned communications device, it may be determined that the communications device is the to-be-positioned communications device. Then the first communications device establishes a communication link to the to-be-positioned communications device according to preset authentication information, and the first communications device sends a position information request message to the to-be-positioned communications device by using the communication link. After the to-be-positioned communications device receives the position information request message, the to-be-positioned communications device may send its position information to the first communications device by using a position information response message. The first communications device receives the position information response message sent by the to-be-positioned communications device, and obtains the position information of the to-be-positioned communications device from the position information response message.

Further, the first communications device in this embodiment may include a display. This embodiment may further include the following: The first communications device may display the position information of the to-be-positioned communications device by using the display; or the first communications device sends a first positioning response message to a second communications device, where the first positioning response message includes the position information of the to-be-positioned communications device.

According to this embodiment, a first communications device receives a first positioning request message, where the first positioning request message includes an identifier of a to-be-positioned communications device, and the first positioning request message is used to request position information of the to-be-positioned communications device. The first communications device receives, by using a short-range wireless communications technology, a broadcast message sent by the to-be-positioned communications device, where the broadcast message includes the identifier of the to-be-positioned communications device; then establishes a communication link to the to-be-positioned communications device; and obtains the position information of the to-be-positioned communications device from the to-be-positioned communications device. Therefore, it is implemented that the first communications device can obtain position information of another communications device.

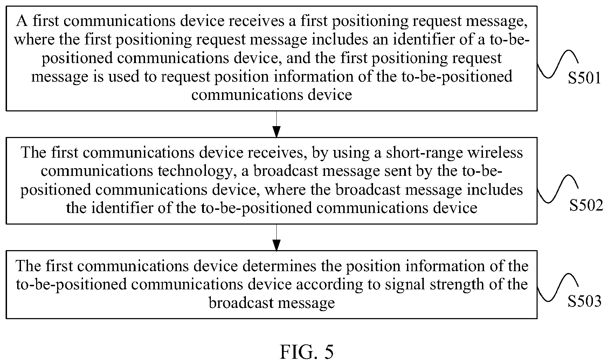

FIG. 5 is a flowchart of a fifth embodiment of a positioning method according to the present invention. As shown in FIG. 5, the method in this embodiment may include the following steps.

S501. A first communications device receives a first positioning request message, where the first positioning request message includes an identifier of a to-be-positioned communications device, and the first positioning request message is used to request position information of the to-be-positioned communications device.

In this embodiment, a specific implementation process of S501 is similar to the specific implementation process of S301 in the third method embodiment of the present invention. For details, refer to related records in the foregoing method embodiment of the present invention. Details are not described herein again.

S502. The first communications device receives, by using a short-range wireless communications technology, a broadcast message sent by the to-be-positioned communications device, where the broadcast message includes the identifier of the to-be-positioned communications device.

S503. The first communications device determines the position information of the to-be-positioned communications device according to signal strength of the broadcast message.

In this embodiment, the first communications device receives, by using the short-range wireless communications technology, the broadcast message sent by the to-be-positioned communications device. Specifically, the to-be-positioned communications device in this embodiment does not send the position information to another communications device by using the broadcast message. When determining, by using the short-range wireless communications technology, that communications devices that support the same short-range wireless communications technology exist in a scanning distance range, the first communications device may receive broadcast messages sent by the communications devices, where the broadcast messages include identifiers of the communications devices. When a broadcast message that is sent by a communications device and is received by the first communications device includes the identifier of the to-be-positioned communications device, it may be determined that the communications device is the to-be-positioned communications device. Then the first communications device may determine the position information of the to-be-positioned communications device according to signal strength of the broadcast message. For example, the broadcast message is attenuated in a transmission process. The first communications device may learn signal strength of the broadcast message sent by the to-be-positioned communications device. At the same time, the first communications device may determine signal strength of the received broadcast message sent by the to-be-positioned communications device. Therefore, according to a difference between signal strength of the broadcast message at a sending point and signal strength of the broadcast message at a receiving point, a distance between the sending point and the receiving point, that is, a distance between the to-be-positioned communications device and the first communications device, may be determined, which increases accuracy of positioning a position of the to-be-positioned communications device by the first communications device. For example, the to-be-positioned communications device is located at a place 5 m away from the first communications device.

The first communications device sends a position information request message to the to-be-positioned communications device by using a communication link. After the to-be-positioned communications device receives the position information request message, the to-be-positioned communications device may send its position information to the first communications device by using a position information response message. The first communications device receives the position information response message sent by the to-be-positioned communications device, and obtains the position information of the to-be-positioned communications device from the position information response message.

Further, the first communications device in this embodiment may include a display. This embodiment may further include the following: The first communications device may display the position information of the to-be-positioned communications device by using the display; or the first communications device sends a first positioning response message to a second communications device, where the first positioning response message includes the position information of the to-be-positioned communications device.

Optionally, after the first communications device determines the position information of the to-be-positioned communications device, this embodiment may further include the following: The first communications device may send the determined position information of the to-be-positioned communications device to the to-be-positioned communications device.

According to this embodiment, a first communications device receives a first positioning request message, where the first positioning request message includes an identifier of a to-be-positioned communications device, and the first positioning request message is used to request position information of the to-be-positioned communications device; receives, by using a short-range wireless communications technology, a broadcast message sent by the to-be-positioned communications device, where the broadcast message includes the identifier the to-be-positioned communications device; and determines the position information of the to-be-positioned communications device according to signal strength of the broadcast message. Therefore, it is implemented that the first communications device can obtain position information of another communications device.

Optionally, in the method embodiment shown in any one of FIG. 3 to FIG. 5, after the first communications device obtains the position information of the to-be-positioned communications device, the first communications device may store the position information of the to-be-positioned communications device, that is, store a correspondence between the identifier and the position information that are of the to-be-positioned communications device. Therefore, when needing to obtain the position information of the to-be-positioned communications device next time, the first communications device may directly obtain the position information of the to-be-positioned communications device from the stored position information without a need to perform scanning within a distance range.

The following describes application scenarios of the method embodiment shown in any one of FIG. 3 to FIG. 5 by using examples, and the present invention is not limited to the following application scenarios.

In a first application scenario, a wife does not need to call a husband by using a mobile phone and can learn whether the husband takes a Bluetooth-enabled key. That is, the wife may send, to a mobile phone of the husband by using the mobile phone, a positioning request message that is used to request position information of the Bluetooth-enabled key. When the mobile phone of the husband finds by means of scanning, by using Bluetooth, that the Bluetooth-enabled key exists in a distance range, the wife may determine that the husband takes the Bluetooth-enabled key.

In a second application scenario, a user may remotely learn whether a Bluetooth-enabled device is in a vehicle. A 3G+Bluetooth apparatus may be mounted in the vehicle. The user may send, to the vehicle by using a mobile phone, a positioning request message that is used to request position information of the Bluetooth-enabled device. When the vehicle finds by means of scanning, by using Bluetooth, that the Bluetooth-enabled device exists in a distance range, the user may determine that the Bluetooth-enabled device is in the vehicle.

In a third application scenario, when a user finds that the user's wallet with a Bluetooth/WiFi sensor is out of sight, whether the wallet is at home may be determined. That is, the user may send, to a gateway device at home by using a mobile phone, a positioning request message that is used to request position information of the wallet with a Bluetooth/WiFi sensor. When the gateway device finds by means of scanning, by using Bluetooth/WiFi, that the wallet with a Bluetooth/WiFi sensor exists in a distance range, the user may determine that the wallet with a Bluetooth/WiFi sensor is at home.

In a fourth application scenario, a user needs to query a position of a mobile phone A. The user may send, to a position management server, a positioning request message that is used to request position information of the mobile phone A. The position management server may send the positioning request message to mobile phones that have registered with the position management server. The registered mobile phones search for the mobile phone A in scanning distance ranges. Therefore, the user may determine the position of the mobile phone A.

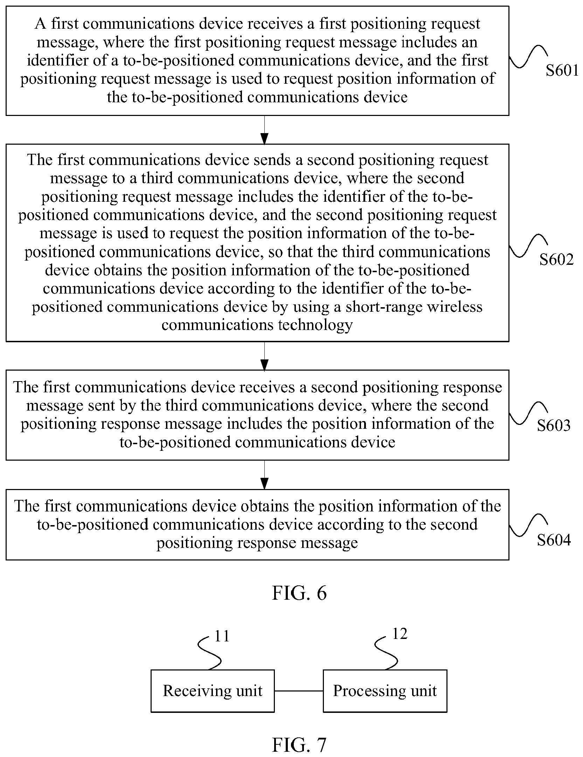

FIG. 6 is a flowchart of a sixth embodiment of a positioning method according to the present invention. As shown in FIG. 6, the method in this embodiment may include the following steps.

S601. A first communications device receives a first positioning request message, where the first positioning request message includes an identifier of a to-be-positioned communications device, and the first positioning request message is used to request position information of the to-be-positioned communications device.

In this embodiment, a specific implementation process of S601 is similar to the specific implementation process of S301 in the third method embodiment of the present invention. For details, refer to related records in the foregoing method embodiment of the present invention. Details are not described herein again.

S602. The first communications device sends a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using a short-range wireless communications technology.

S603. The first communications device receives a second positioning response message sent by the third communications device, where the second positioning response message includes the position information of the to-be-positioned communications device.

S604. The first communications device obtains the position information of the to-be-positioned communications device according to the second positioning response message.

In this embodiment, the first communications device may receive, by using the short-range wireless communications technology, a broadcast message sent by the to-be-positioned communications device. Specifically, when the first communications device determines, by using the short-range wireless communications technology, that the to-be-positioned communications device does not exist in a scanning distance range, the first communications device may send, by using the short-range wireless communications technology, a second positioning request message to the third communications device that supports the same short-range wireless communications technology, or send a second positioning request message to the third communications device by using a long-range wireless communications technology. Therefore, the third communications device may obtain the position information of the to-be-positioned communications device according to the identifier of the to-be-positioned communications device by using the short-range wireless communications technology. For example, the third communications device determines the position information of the to-be-positioned communications device according to a solution of the method embodiment shown in any one of FIG. 1 to FIG. 5; or the third communications device may send, to a fourth communications device, a positioning request message that is used to request the position information of the to-be-positioned communications device; and by analogy (similar to a web crawler), until a communications device determines the position information of the to-be-positioned communications device. Then the position information of the to-be-positioned communications device is returned to the third communications device according to a reverse procedure. Then the third communications device sends, to the first communications device, the position information of the to-be-positioned communications device that is obtained by using the short-range wireless communications technology. Therefore, the first communications device receives the second positioning response message that includes the position information of the to-be-positioned communications device and that is sent by the third communications device.

According to this embodiment, a first communications device receives a first positioning request message, where the first positioning request message includes an identifier of a to-be-positioned communications device, and the first positioning request message is used to request position information of the to-be-positioned communications device; sends a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using a short-range wireless communications technology; receives a second positioning response message sent by the third communications device, where the second positioning response message includes the position information of the to-be-positioned communications device; and thereby obtains the position information of the to-be-positioned communications device. Therefore, it is implemented that the first communications device can obtain position information of another communications device.

FIG. 7 is a schematic structural diagram of a first embodiment of a communications device according to the present invention. As shown in FIG. 7, the communications device in this embodiment may include a receiving unit 11 and a processing unit 12. The receiving unit 11 is configured to receive a first positioning request message, where the first positioning request message includes an identifier of a to-be-positioned communications device, and the first positioning request message is used to request position information of the to-be-positioned communications device. The processing unit 12 is configured to obtain, by using a short-range wireless communications technology, the position information of the to-be-positioned communications device according to the identifier of the to-be-positioned communications device that is included in the first positioning request message received by the receiving unit 11.

The communications device in this embodiment may be used to perform the technical solutions of the foregoing method embodiments of the present invention. Implementation principles and technical effects of the communications device are similar and are not described herein again.

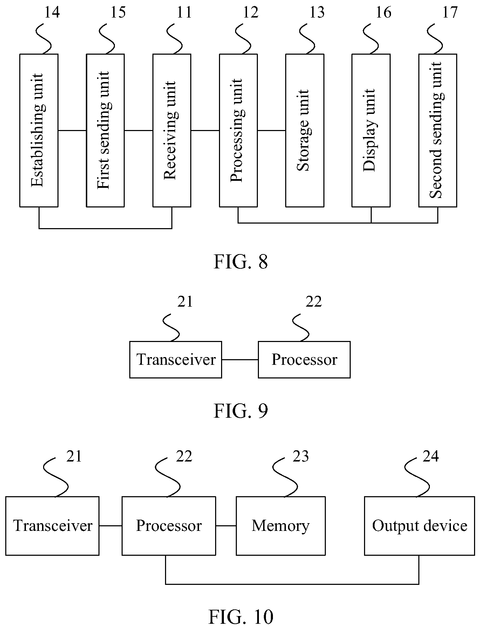

FIG. 8 is a schematic structural diagram of a second embodiment of a communications device according to the present invention. As shown in FIG. 8, the communications device in this embodiment is based on the structure of the communications device shown in FIG. 7. Optionally, the communications device in this embodiment may include a storage unit 13. The storage unit 13 is configured to: after the processing unit 12 obtains, by using the short-range wireless communications technology, the position information of the to-be-positioned communications device according to the identifier of the to-be-positioned communications device that is included in the first positioning request message received by the receiving unit 11, store a correspondence between the identifier and the position information that are of the to-be-positioned communications device according to the identifier of the to-be-positioned communications device and the position information of the to-be-positioned communications device. The processing unit 12 is further configured to determine, according to the identifier of the to-be-positioned communications device, the position information of the to-be-positioned communications device from the correspondence stored in the storage unit 13.

Optionally, the receiving unit 11 is further configured to: before the processing unit 12 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier and the position information that are of the to-be-positioned communications device. The processing unit 12 is specifically configured to obtain the position information of the to-be-positioned communications device according to the broadcast message.

Optionally, the communications device in this embodiment may further include an establishing unit 14 and a first sending unit 15. The receiving unit 11 is further configured to: before the processing unit 12 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device. The establishing unit 14 is configured to establish a communication link to the to-be-positioned communications device according to the broadcast message received by the receiving unit 11. The first sending unit 15 is configured to send a position information request message to the to-be-positioned communications device by using the communication link established by the establishing unit 14. The receiving unit 11 is further configured to receive a position information response message sent by the to-be-positioned communications device, where the position information response message includes the position information of the to-be-positioned communications device. The processing unit 12 is specifically configured to obtain the position information of the to-be-positioned communications device according to the position information response message.

Optionally, the receiving unit 11 is further configured to: before the processing unit 12 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device. The processing unit 12 is specifically configured to determine the position information of the to-be-positioned communications device according to signal strength of the broadcast message received by the receiving unit 11.

Optionally, the communications device in this embodiment may further include a first sending unit 15. The first sending unit 15 is configured to: before the processing unit 12 obtains the position information of the to-be-positioned communications device according to the identifier of the to-be-positioned communications device by using the short-range wireless communications technology, send a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology. The receiving unit 11 is further configured to receive a second positioning response message sent by the third communications device, where the second positioning response message includes the position information of the to-be-positioned communications device. The processing unit 12 is specifically configured to obtain the position information of the to-be-positioned communications device according to the second positioning response message received by the receiving unit 11.

Optionally, the communications device in this embodiment may further include a display unit 16. The receiving unit 11 is specifically configured to receive the first positioning request message entered by a user. The display unit 16 is configured to: after the processing unit 12 obtains the position information of the to-be-positioned communications device according to the identifier of the to-be-positioned communications device by using the short-range wireless communications technology, display the position information of the to-be-positioned communications device.

Optionally, the communications device in this embodiment may further include a second sending unit 17. The receiving unit 11 is specifically configured to receive the first positioning request message sent by a second communications device. The second sending unit 17 is configured to: after the processing unit 12 obtains the position information of the to-be-positioned communications device according to the identifier of the to-be-positioned communications device by using the short-range wireless communications technology, send a first positioning response message to the second communications device, where the first positioning response message includes the position information of the to-be-positioned communications device.

The communications device in this embodiment may be used to perform the technical solutions of the foregoing method embodiments of the present invention. Implementation principles and technical effects of the communications device are similar and are not described herein again.

FIG. 9 is a schematic structural diagram of a third embodiment of a communications device according to the present invention. As shown in FIG. 9, the communications device in this embodiment may include a transceiver 21 and a processor 22. The transceiver 21 is configured to receive a first positioning request message, where the first positioning request message includes an identifier of a to-be-positioned communications device, and the first positioning request message is used to request position information of the to-be-positioned communications device. The processor 22 is configured to obtain, by using a short-range wireless communications technology, the position information of the to-be-positioned communications device according to the identifier of the to-be-positioned communications device that is included in the first positioning request message received by the transceiver 21.

The communications device in this embodiment may be used to perform the technical solutions of the foregoing method embodiments of the present invention. Implementation principles and technical effects of the communications device are similar and are not described herein again.

FIG. 10 is a schematic structural diagram of a fourth embodiment of a communications device according to the present invention. As shown in FIG. 10, the communications device in this embodiment is based on the structure of the communications device shown in FIG. 9. Optionally, the communications device in this embodiment may further include a memory 23. The memory 23 is configured to: after the processor 22 obtains, by using the short-range wireless communications technology, the position information of the to-be-positioned communications device according to the identifier of the to-be-positioned communications device that is included in the first positioning request message received by the transceiver 21, store a correspondence between the identifier and the position information that are of the to-be-positioned communications device according to the identifier of the to-be-positioned communications device and the position information of the to-be-positioned communications device. The processor 22 is further configured to determine, according to the identifier of the to-be-positioned communications device, the position information of the to-be-positioned communications device from the correspondence stored in the memory 23.

Optionally, the transceiver 21 is further configured to: before the processor 22 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier and the position information that are of the to-be-positioned communications device. The processor 22 is specifically configured to obtain the position information of the to-be-positioned communications device according to the broadcast message.

Optionally, the transceiver 21 is further configured to: before the processor 22 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device. The processor 22 is further configured to establish a communication link to the to-be-positioned communications device according to the broadcast message received by the transceiver 21. The transceiver 21 is further configured to send a position information request message to the to-be-positioned communications device by using the communication link established by the processor 22, and receive a position information response message sent by the to-be-positioned communications device, where the position information response message includes the position information of the to-be-positioned communications device. That the processor 22 obtains the position information of the to-be-positioned communications device according to the identifier of the to-be-positioned communications device by using the short-range wireless communications technology is specifically: the processor 22 obtains the position information of the to-be-positioned communications device according to the position information response message.

Optionally, the transceiver 21 is further configured to: before the processor 22 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device. The processor 22 is specifically configured to determine the position information of the to-be-positioned communications device according to signal strength of the broadcast message received by the transceiver 21.

Optionally, the transceiver 21 is further configured to: before the processor 22 obtains the position information of the to-be-positioned communications device according to the identifier of the to-be-positioned communications device by using the short-range wireless communications technology, send a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology; and receive a second positioning response message sent by the third communications device, where the second positioning response message includes the position information of the to-be-positioned communications device. The processor 22 is specifically configured to obtain the position information of the to-be-positioned communications device according to the second positioning response message received by the transceiver 21.

Optionally, the communications device in this embodiment may further include an output device 24. The transceiver 21 is specifically configured to receive the first positioning request message entered by a user. The output device 24 is configured to: after the processor 22 obtains the position information of the to-be-positioned communications device according to the identifier of the to-be-positioned communications device by using the short-range wireless communications technology, display the position information of the to-be-positioned communications device. The output device 24 is, for example, a display.

Optionally, that the transceiver 21 receives the first positioning request message is specifically: The transceiver 21 receives the first positioning request message sent by a second communications device. The transceiver 21 is further configured to: after the processor 22 obtains the position information of the to-be-positioned communications device according to the identifier of the to-be-positioned communications device by using the short-range wireless communications technology, send a first positioning response message to the second communications device, where the first positioning response message includes the position information of the to-be-positioned communications device.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

## Claims

1. A positioning method of a system, the system comprise a first communications device, a second communications device and a to-be-positioned communications device, comprising:
receiving, by the first communications device, a first positioning request sent by the second communications device, wherein the first positioning request comprises an identifier of the to-be-positioned communications device, and the first positioning request includes information for requesting a position of the to-be-positioned communications device;
receiving, by the first communications device by using a short-range wireless communications technology, a broadcast message sent by the to-be-positioned communications device, wherein the broadcast message includes the identifier of the to-be-positioned communications device;
obtaining, by the first communications device, the position information of the to-be-positioned communications device from the to-be-positioned communications device by using the short-range wireless communications technology, including determining, by the first communications device, the position information of the to-be-positioned communications device according to a signal strength of the broadcast message, wherein the position information includes at least one of longitude information and latitude information of a position of the to-be-positioned communications device, or real-world location information of the to-be-positioned communications device, or a relative position of the to-be-positioned communications device with respect to the first communication device;
displaying, by the first communications device, the position information of the to-be-positioned communications device on a display of the first communications device;
displaying, by the second communications device, the position information of the to-be-positioned communications device on a display of the second communications device.

2. The method according to claim 1, wherein obtaining, by the first communications device, the position information of the to-be-positioned communications device from the to-be-positioned communications device by using the short-range wireless communications technology comprises:
based on the broadcast message, by the first communications device, establishing a communication link with the to-be-positioned communications device;
requesting, by the first communications device, over the communication link, the to-be-positioned communications device to provide the position of the to-be-positioned communications device; and
receiving, by the first communications device, over the communication link, the position of the to-be-positioned communications device sent by the to-be-positioned communications device.

3. The method according to claim 1, wherein: the broadcast message includes the position information of the to-be-positioned communications device; and
obtaining, by the first communications device, the position information of the to-be-positioned communications device comprises:
obtaining, by the first communications device, the position information of the to-be-positioned communications device according to the broadcast message.

4. The method according to claim 1, wherein:
after obtaining, by the first communications device, the position information of the to-be-positioned communications device, the method further comprises:
sending, by the first communications device, a first positioning response to the second communications device, wherein the first positioning response comprises the position information of the to-be-positioned communications device.

5. The method according to claim 1, wherein:
obtaining, by the second communications device, the position information of the to-be-positioned communications device from the to-be-positioned communications device by using the short-range wireless communications technology, wherein the position information includes at least one of longitude information and latitude information of a position of the to-be-positioned communications device, or real-world location information of the to-be-positioned communications device, or a relative position of the to-be-positioned communications device with respect to the first communication device.

6. A first communications device, comprising:
a transceiver (21), configured to receive a first positioning request from a second communications device, wherein the first positioning request comprises an identifier of a to-be-positioned communications device, and the first positioning request includes information for requesting a position of the to-be-positioned communications device;
receive by using a short-range wireless communications technology, a broadcast message sent by the to-be-positioned communications device, wherein the broadcast message includes the identifier of the to-be-positioned communications device;
and a processor (22) configured to obtain the position information of the to-be-positioned communications device from the to-be-positioned communications device by using the short-range wireless communications technology, wherein the processor is further configured to determine the position information of the to-be-positioned communications device according to a signal strength of the broadcast message , wherein the position information includes at least one of longitude information and latitude information of a position of the to-be-positioned communications device, or real-world location information of the to-be-positioned communications device, or a relative position of the to-be-positioned communications device with respect to the first communication device;
display, by the first communications device, the position information of the to-be-positioned communications device on a display of the first communications device.

7. The first communications device according to claim 6, wherein obtaining the position information of the to-be-positioned communications device from the to-be-positioned communications device by using the short-range wireless communications technology comprises:
based on the broadcast message, the transceiver is further configured to establish a communication link with the to-be-positioned communications device;
to request, over the communication link, the to-be-positioned communications device to provide the position of the to-be-positioned communications device; and
to receive, over the communication link, the position of the to-be-positioned communications device sent by the to-be-positioned communications device.

8. The first communications device according to claim 6, wherein:
the broadcast message includes the position information that are of the to-be-positioned communications device; and
the processor is configured to obtain the position information of the to-be-positioned communications device according to the broadcast message.

9. The first communications device according to claim 6, wherein:
the processor is further configured to, before obtaining the position information of the to-be-positioned communications device, establish a communication link to the to-be-positioned communications device upon determining that the broadcast message includes the identifier of the to-be-positioned communications device;
the transceiver is further configured to send a position information request to the to-be-positioned communications device by using the communication link established by the processor, and receive a position information response sent by the to-be-positioned communications device, wherein the position information response comprises the position information of the to-be-positioned communications device; and
the processor is further configured to obtain the position information of the to-be-positioned communications device according to the position information response.

10. The first communications device according to claim 6, wherein:
the transceiver is further configured to: after the processor obtains the position information of the to-be-positioned communications device, send a first positioning response to the second communications device, wherein the first positioning response comprises the position information of the to-be-positioned communications device.
store an association between the identifier of the to-be-positioned communications device and the position information of the to-be-positioned communications device;
based on the identifier of the to-be-positioned communications device included in the second positioning request, determine the position information of the to-be-positioned communications device using the stored association.

## Patentansprüche

1. Positionierungsverfahren eines Systems, wobei das System eine erste Kommunikationsvorrichtung, eine zweite Kommunikationsvorrichtung und eine zu positionierende Kommunikationsvorrichtung umfasst, umfassend:
Empfangen einer ersten Positionierungsanforderung, die von der zweiten Kommunikationsvorrichtung gesendet wurde, durch die erste Kommunikationsvorrichtung, wobei die erste Positionierungsanforderung eine Kennung der zu positionierenden Kommunikationsvorrichtung umfasst und die erste Positionierungsanforderung Informationen zum Anfordern einer Position der zu positionierenden Kommunikationsvorrichtung enthält;
Empfangen einer von der zu positionierenden Kommunikationsvorrichtung gesendeten Rundsendungsnachricht durch die erste Kommunikationsvorrichtung unter Verwendung einer drahtlosen Kommunikationstechnologie mit kurzer Reichweite, wobei die Rundsendungsnachricht die Kennung der zu positionierenden Kommunikationsvorrichtung enthält;
Erhalten der Positionsinformationen der zu positionierenden Kommunikationsvorrichtung von der zu positionierenden Kommunikationsvorrichtung durch die erste Kommunikationsvorrichtung unter Verwendung der drahtlosen Kommunikationstechnologie mit kurzer Reichweite, einschließlich des Bestimmens der Positionsinformationen der zu positionierenden Kommunikationsvorrichtung gemäß einer Signalstärke der Rundsendungsnachricht durch die erste Kommunikationsvorrichtung, wobei die Positionsinformationen Längengradinformationen und Breitengradinformationen einer Position der zu positionierenden Kommunikationsvorrichtung und/oder Realwelt-Standortinformationen der zu positionierenden Kommunikationsvorrichtung und/oder eine relative Position der zu positionierenden Kommunikationsvorrichtung in Bezug auf die erste Kommunikationsvorrichtung umfassen;
Anzeigen der Positionsinformationen der zu positionierenden Kommunikationsvorrichtung durch die erste Kommunikationsvorrichtung auf einer Anzeige der ersten Kommunikationsvorrichtung;
Anzeigen der Positionsinformationen der zu positionierenden Kommunikationsvorrichtung durch die zweite Kommunikationsvorrichtung auf einer Anzeige der zweiten Kommunikationsvorrichtung.

2. Verfahren nach Anspruch 1, wobei das Erhalten der Positionsinformationen der zu positionierenden Kommunikationsvorrichtung von der zu positionierenden Kommunikationsvorrichtung durch die erste Kommunikationsvorrichtung unter Verwendung der drahtlosen Kommunikationstechnologie mit kurzer Reichweite umfasst:
basierend auf der Rundsendungsnachricht, Herstellen einer Kommunikationsverbindung mit der zu positionierenden Kommunikationsvorrichtung durch die erste Kommunikationsvorrichtung;
Anfordern über die Kommunikationsverbindung durch die erste Kommunikationsvorrichtung, dass die zu positionierende Kommunikationsvorrichtung die Position der zu positionierenden Kommunikationsvorrichtung bereitstellt; und
Empfangen über die Kommunikationsverbindung der Position der zu positionierenden Kommunikationsvorrichtung, die von der zu positionierenden Kommunikationsvorrichtung gesendet wurde, durch die erste Kommunikationsvorrichtung.

3. Verfahren nach Anspruch 1, wobei: die Rundsendungsnachricht die Positionsinformationen der zu positionierenden Kommunikationsvorrichtung enthält; und
Erhalten der Positionsinformationen der zu positionierenden Kommunikationsvorrichtung durch die erste Kommunikationsvorrichtung umfasst:
Erhalten der Positionsinformationen der zu positionierenden Kommunikationsvorrichtung durch die erste Kommunikationsvorrichtung gemäß der Rundsendungsnachricht.

4. Verfahren nach Anspruch 1, wobei:
nach dem Erhalten der Positionsinformationen der zu positionierenden Kommunikationsvorrichtung durch die erste Kommunikationsvorrichtung das Verfahren ferner umfasst:
Senden einer ersten Positionierungsantwort durch die erste Kommunikationsvorrichtung an die zweite Kommunikationsvorrichtung, wobei die erste Positionierungsantwort die Positionsinformationen der zu positionierenden Kommunikationsvorrichtung umfasst.

5. Verfahren nach Anspruch 1, wobei:
Erhalten der Positionsinformationen der zu positionierenden Kommunikationsvorrichtung von der zu positionierenden Kommunikationsvorrichtung durch die zweite Kommunikationsvorrichtung unter Verwendung der drahtlosen Kommunikationstechnologie mit kurzer Reichweite, wobei die Positionsinformationen Längengradinformationen und Breitengradinformationen einer Position der zu positionierenden Kommunikationsvorrichtung und/oder Realwelt-Standortinformationen der zu positionierenden Kommunikationsvorrichtung und/oder eine relative Position der zu positionierenden Kommunikationsvorrichtung in Bezug auf die erste Kommunikationsvorrichtung enthalten.

6. Erste Kommunikationsvorrichtung, umfassend:
einen Transceiver (21), der dazu konfiguriert ist, eine erste Positionierungsanforderung von einer zweiten Kommunikationsvorrichtung zu empfangen, wobei die erste Positionierungsanforderung eine Kennung einer zu positionierenden Kommunikationsvorrichtung umfasst, und die erste Positionierungsanforderung Informationen zum Anfordern einer Position der zu positionierenden Kommunikationsvorrichtung enthält;
Empfangen einer von der zu positionierenden Kommunikationsvorrichtung gesendeten Rundsendungsnachricht unter Verwendung einer drahtlosen Kommunikationstechnologie mit kurzer Reichweite, wobei die Rundsendungsnachricht die Kennung der zu positionierenden Kommunikationsvorrichtung enthält;
und einen Prozessor (22), der dazu konfiguriert ist, die Positionsinformationen der zu positionierenden Kommunikationsvorrichtung von der zu positionierenden Kommunikationsvorrichtung unter Verwendung der drahtlosen Kommunikationstechnologie mit kurzer Reichweite zu erhalten, wobei der Prozessor ferner dazu konfiguriert ist, die Positionsinformationen der zu positionierenden Kommunikationsvorrichtung gemäß einer Signalstärke der Rundsendungsnachricht zu bestimmen, wobei die Positionsinformationen Längengradinformationen und Breitengradinformationen einer Position der zu positionierenden Kommunikationsvorrichtung und/oder Realwelt-Standortinformationen der zu positionierenden Kommunikationsvorrichtung und/oder eine relative Position der zu positionierenden Kommunikationsvorrichtung in Bezug auf die erste Kommunikationsvorrichtung enthalten;
Anzeigen der Positionsinformationen des zu positionierenden Kommunikationsvorrichtung durch die erste Kommunikationsvorrichtung auf einer Anzeige der ersten Kommunikationsvorrichtung.

7. Erste Kommunikationsvorrichtung nach Anspruch 6, wobei das Erhalten der Positionsinformationen der zu positionierenden Kommunikationsvorrichtung von der zu positionierenden Kommunikationsvorrichtung unter Verwendung der drahtlosen Kommunikationstechnologie mit kurzer Reichweite umfasst:
basierend auf der Rundsendungsnachricht, der Transceiver ferner dazu konfiguriert ist, eine Kommunikationsverbindung mit der zu positionierenden Kommunikationsvorrichtung herzustellen;
über die Kommunikationsverbindung anzufordern, dass die zu positionierende Kommunikationsvorrichtung die Position der zu positionierenden Kommunikationsvorrichtung bereitstellt; und
über die Kommunikationsverbindung die Position der zu positionierenden Kommunikationsvorrichtung, die von der zu positionierenden Kommunikationsvorrichtung gesendet wurde, zu empfangen.

8. Erste Kommunikationsvorrichtung nach Anspruch 6, wobei:
die Rundsendungsnachricht die Positionsinformationen, die von der zu positionierenden Kommunikationsvorrichtung stammen, enthält; und
der Prozessor dazu konfiguriert ist, die Positionsinformationen der zu positionierenden Kommunikationsvorrichtung gemäß der Rundsendungsnachricht zu erhalten.

9. Erste Kommunikationsvorrichtung nach Anspruch 6, wobei:
der Prozessor ferner dazu konfiguriert ist, vor dem Erhalten der Positionsinformationen der zu positionierenden Kommunikationsvorrichtung eine Kommunikationsverbindung zu der zu positionierenden Kommunikationsvorrichtung herzustellen, wenn bestimmt wird, dass die Rundsendungsnachricht die Kennung der zu positionierenden Kommunikationsvorrichtung enthält;
der Transceiver ferner dazu konfiguriert ist, eine Positionsinformationsanforderung an die zu positionierende Kommunikationsvorrichtung unter Verwendung der von dem Prozessor hergestellten Kommunikationsverbindung zu senden und eine von der zu positionierenden Kommunikationsvorrichtung gesendete Positionsinformationsantwort zu empfangen, wobei die Positionsinformationsantwort die Positionsinformationen der zu positionierenden Kommunikationsvorrichtung umfasst; und
der Prozessor ferner dazu konfiguriert ist, die Positionsinformationen der zu positionierenden Kommunikationsvorrichtung gemäß der Positionsinformationsantwort zu erhalten.

10. Erste Kommunikationsvorrichtung nach Anspruch 6, wobei:
der Transceiver ferner dazu konfiguriert ist: nachdem der Prozessor die Positionsinformationen der zu positionierenden Kommunikationsvorrichtung erhalten hat, eine erste Positionierungsantwort an die zweite Kommunikationsvorrichtung zu senden, wobei die erste Positionierungsantwort die Positionsinformationen der zu positionierenden Kommunikationsvorrichtung umfasst;
eine Zuordnung zwischen der Kennung der zu positionierenden Kommunikationsvorrichtung und den Positionsinformationen der zu positionierenden Kommunikationsvorrichtung zu speichern;
basierend auf der Kennung der zu positionierenden Kommunikationsvorrichtung, die in der zweiten Positionierungsanforderung enthalten ist, die Positionsinformationen der zu positionierenden Kommunikationsvorrichtung unter Verwendung der gespeicherten Zuordnung zu bestimmen.

## Revendications

1. Procédé de positionnement d'un système, le système comprenant un premier dispositif de communication, un deuxième dispositif de communication et un dispositif de communication à positionner, comprenant :
la réception, par le premier dispositif de communication, d'une première demande de positionnement envoyée par le deuxième dispositif de communication, dans lequel la première demande de positionnement comprend un identifiant du dispositif de communication à positionner, et la première demande de positionnement inclut des informations permettant de demander une position du dispositif de communication à positionner ;
la réception, par le premier dispositif de communication en utilisant une technologie de communication sans fil à courte portée, d'un message de diffusion envoyé par le dispositif de communication à positionner, dans lequel le message de diffusion inclut l'identifiant du dispositif de communication à positionner ;
l'obtention, par le premier dispositif de communication, des informations de position du dispositif de communication à positionner en provenance du dispositif de communication à positionner en utilisant la technologie de communication sans fil à courte portée, incluant la détermination, par le premier dispositif de communication, des informations de position du dispositif de communication à positionner en fonction d'une intensité de signal du message de diffusion, dans lequel les informations de position incluent des informations de longitude et/ou des informations de latitude d'une position du dispositif de communication à positionner, ou des informations de localisation du monde réel du dispositif de communication à positionner, ou une position relative du dispositif de communication à positionner par rapport au premier dispositif de communication ;
l'affichage, par le premier dispositif de communication, des informations de position du dispositif de communication à positionner sur un dispositif d'affichage du premier dispositif de communication ;
l'affichage, par le deuxième dispositif de communication, des informations de position du dispositif de communication à positionner sur un dispositif d'affichage du deuxième dispositif de communication.

2. Procédé selon la revendication 1, dans lequel l'obtention, par le premier dispositif de communication, des informations de position du dispositif de communication à positionner en provenance du dispositif de communication à positionner en utilisant la technologie de communication sans fil à courte portée comprend :
sur la base du message de diffusion, par le premier dispositif de communication, l'établissement d'une liaison de communication avec le dispositif de communication à positionner ;
la demande, par le premier dispositif de communication, sur la liaison de communication, au dispositif de communication à positionner de fournir la position du dispositif de communication à positionner ; et
la réception, par le premier dispositif de communication, sur la liaison de communication, de la position du dispositif de communication à positionner envoyée par le dispositif de communication à positionner.

3. Procédé selon la revendication 1, dans lequel : le message de diffusion inclut les informations de position du dispositif de communication à positionner ; et
l'obtention, par le premier dispositif de communication, des informations de position du dispositif de communication à positionner comprend :
l'obtention, par le premier dispositif de communication, des informations de position du dispositif de communication à positionner en fonction du message de diffusion.

4. Procédé selon la revendication 1,
après l'obtention, par le premier dispositif de communication, des informations de position du dispositif de communication à positionner, le procédé comprenant en outre :
l'envoi, par le premier dispositif de communication, d'une première réponse de positionnement au deuxième dispositif de communication, dans lequel la première réponse de positionnement comprend les informations de position du dispositif de communication à positionner.

5. Procédé selon la revendication 1, dans lequel :
l'obtention, par le deuxième dispositif de communication, des informations de position du dispositif de communication à positionner en provenance du dispositif de communication à positionner en utilisant la technologie de communication sans fil à courte portée, dans lequel les informations de position incluent des informations de longitude et/ou des informations de latitude d'une position du dispositif de communication à positionner, ou des informations de localisation du monde réel du dispositif de communication à positionner, ou une position relative du dispositif de communication à positionner par rapport au premier dispositif de communication.

6. Premier dispositif de communication, comprenant :
un émetteur-récepteur (21), configuré pour
recevoir une première demande de positionnement en provenance d'un deuxième dispositif de communication, dans lequel la première demande de positionnement comprend un identifiant d'un dispositif de communication à positionner, et la première demande de positionnement inclut des informations permettant de demander une position du dispositif de communication à positionner ;
recevoir, en utilisant une technologie de communication sans fil à courte portée, un message de diffusion envoyé par le dispositif de communication à positionner, dans lequel le message de diffusion inclut l'identifiant du dispositif de communication à positionner ;
et un processeur (22) configuré pour
obtenir les informations de position du dispositif de communication à positionner en provenance du dispositif de communication à positionner en utilisant la technologie de communication sans fil à courte portée, dans lequel le processeur est configuré en outre pour déterminer les informations de position du dispositif de communication à positionner en fonction d'une intensité de signal du message de diffusion, dans lequel les informations de position incluent des informations de longitude et/ou des informations de latitude d'une position du dispositif de communication à positionner, ou des informations de localisation du monde réel du dispositif de communication à positionner, ou une position relative du dispositif de communication à positionner par rapport au premier dispositif de communication ;
afficher, par le premier dispositif de communication, les informations de position du dispositif de communication à positionner sur un dispositif d'affichage du premier dispositif de communication.

7. Premier dispositif de communication selon la revendication 6, dans lequel l'obtention des informations de position du dispositif de communication à positionner en provenance du dispositif de communication à positionner en utilisant la technologie de communication sans fil à courte portée comprend :
sur la base du message de diffusion, l'émetteur-récepteur est configuré en outre pour établir une liaison de communication avec le dispositif de communication à positionner ;
pour demander, sur la liaison de communication, au dispositif de communication à positionner de fournir la position du dispositif de communication à positionner ; et
pour recevoir, sur la liaison de communication, la position du dispositif de communication à positionner envoyée par le dispositif de communication à positionner.

8. Premier dispositif de communication selon la revendication 6, dans lequel :
le message de diffusion inclut les informations de position qui viennent du dispositif de communication à positionner ; et
le processeur est configuré pour obtenir les informations de position du dispositif de communication à positionner en fonction du message de diffusion.

9. Premier dispositif de communication selon la revendication 6, dans lequel :
le processeur est configuré en outre pour, après l'obtention des informations de position du dispositif de communication à positionner, établir une liaison de communication avec le dispositif de communication à positionner lors de la détermination que le message de diffusion inclut l'identifiant du dispositif de communication à positionner ;
l'émetteur-récepteur est configuré en outre pour envoyer une demande d'informations de position au dispositif de communication à positionner en utilisant la liaison de communication établie par le processeur, et recevoir une réponse d'informations de position envoyée par le dispositif de communication à positionner, dans lequel la réponse d'informations de position comprend les informations de position du dispositif de communication à positionner ; et
le processeur est configuré en outre pour obtenir les informations de position du dispositif de communication à positionner en fonction de la réponse d'informations de position.

10. Premier dispositif de communication selon la revendication 6, dans lequel :
l'émetteur-récepteur est configuré en outre pour : après l'obtention par le processeur des informations de position du dispositif de communication à positionner, envoyer une première réponse de positionnement au deuxième dispositif de communication, dans lequel la première réponse de positionnement comprend les informations de position du dispositif de communication à positionner ;
stocker une association entre l'identifiant du dispositif de communication à positionner et les informations de position du dispositif de communication à positionner ;
sur la base de l'identifiant du dispositif de communication à positionner inclus dans la deuxième demande de positionnement, déterminer les informations de position du dispositif de communication à positionner à l'aide de l'association stockée.
